# EUROPEAN PATENT APPLICATION

(11) **EP 4 692 858 A1**
(43) Date of publication of application: **11.02.2026**
(21) Application number: 24779780.6
(22) Date of filing: 19.03.2024
(51) Int. Cl.: G01T 1/20, G21K 4/00

(54) **SCINTILLATOR ARRAY, X-RAY DETECTOR, AND X-RAY INSPECTION DEVICE**

(30) Priority: 31.03.2023 JP 2023058844
(71) Applicant: Niterra Materials Co., Ltd., Yokohama-shi, Kanagawa 235-0032 (JP)
(72) Inventor: HAYASHI, Makoto, Yokohama-shi, Kanagawa 235-0032 (JP); OYAIZU, Eiji, Yokohama-shi, Kanagawa 235-0032 (JP); ADACHI, Yoshitaka, Yokohama-shi, Kanagawa 235-0032 (JP); ROKUTANDA, Takashi, Yokohama-shi, Kanagawa 235-0032 (JP); TAKANO, Hiroaki, Yokohama-shi, Kanagawa 235-0032 (JP)
(74) Representative: Hoffmann Eitle
(86) International application number: PCT/JP2024/010849
(87) International publication number: WO 2024/203657

(57) **Abstract**

A decrease and variations in dimensional accuracy due to deformation is suppressed.

The scintillator array according to an embodiment includes a plurality of scintillator segments each including a sintered body of a rare earth oxysulfide phosphor, a first reflective layer interposed between adjacent scintillator segments so as to integrate the scintillator segments, and a second reflective layer located on a surface side of the scintillator segments on which X-rays are incident. The amount of deformation of the corners of the second reflective layer is 20 µm or smaller.

## Description

### Technical Field

Embodiments described herein relate generally to a scintillator array, an X-ray detector and an X-ray inspection device

### Background Art

In the fields of medical diagnosis, industrial nondestructive testing and the like, inspections using an X-ray inspection device such as an X-ray computed tomography (hereinafter referred to as an X-ray CT device) are performed. The X-ray CT device is configured by an X-ray tube (X-ray source) that emits fan-shaped fan beam X-rays and an X-ray detector including a large number of X-ray detection elements, which are opposed to each other with the tomographic section of an object to be inspected as the center. In the X-ray CT device, an object to be inspected is irradiated with fan beam X-rays from the X-ray tube while rotating the object, and X-ray absorption data items transmitted through the object to be inspected are collected by the X-ray detector. The X-ray absorption data items are then analyzed by a computer to reproduce a tomographic image. A detection element using a solid-state scintillator is widely used as a radiation detector of the X-ray CT device. In an X-ray detector including a detection element using a solid-state scintillator, the resolution of an X-ray CT device and the like can be further enhanced because the detection element is easily downsized to increase the number of channels.

X-ray inspection devices such as an X-ray CT device are used in a variety of fields such as medical and industrial fields. As the X-ray CT device, for example, a multi-slice CT device in which detection elements such as photodiodes are arranged two-dimensionally in rows and columns and a scintillator array is mounted thereon is known. The multi-slice CT device makes it possible to superimpose slice images and thus display a CT image three-dimensionally. The X-ray detector of the X-ray inspection device includes detection elements arranged in a plurality of vertical and horizontal rows, and the detection elements are provided with their respective scintillator segments. X-rays incident upon the scintillator segments are converted into visible light, and the visible light is converted into electrical signals by the detection elements for imaging. In recent years, the detection elements have been decreased in size for high resolution, and a pitch between adjacent detection elements has been narrowed. Accordingly, the scintillator segments are also decreased in size.

Among a variety of scintillator materials used in the scintillator segments as described above, rare earth oxysulfide-based phosphor ceramics have high luminous efficiency and possess suitable characteristics for use in the scintillator segments. For this reason, X-ray detectors are becoming popular in which scintillator segments processed by cutting or grooving from a sintered body (ingot) of rare earth oxysulfide-based phosphor ceramics as scintillator materials are combined with photodiodes as detection elements.

As a scintillator using phosphor ceramics, for example, a scintillator including a sintered body of a gadolinium oxysulfide phosphor is known. A scintillator array is fabricated, for example, as follows. First, rare earth oxysulfide-based phosphor powders as scintillator materials are molded into an appropriate shape and sintered to form a sintered body (ingot). The sintered body of the scintillator materials is subjected to a cutout process such as cutting or grooving to form scintillator segments corresponding to a plurality of detection elements. A reflective layer is formed between the scintillator segments and integrated therewith to produce a scintillator array. In addition, the scintillator array requires a structure in which light generated by incident X-rays is confined within the scintillator segments so as not to pass through the X-ray incident surface and is efficiently taken out toward the photodiodes. For this structure, a reflective layer is also formed on the X-ray incident surface of the scintillator array.

If the scintillator array as described above is used as an X-ray detector, the accuracy of dimension of the scintillator array affects the accuracy of alignment when it is bonded to the photodiodes and consequently affects the resolution of X-ray CT diagnostic images. Since, furthermore, the area of the scintillator array increases with increase in the detection area of the X-ray detector, the accuracy of dimension becomes important.

### Citation List

### Patent Literature

Patent Literature 1: JP 2012-187137
Patent Literature 2: JP 4959877 B

### Summary of Invention

### Technical Problem

Embodiments described herein aim to provide a scintillator array capable of suppressing degradation and variations of accuracy of dimension due to deformation. They also aim to provide a detector and an X-ray inspection device whose resolution and image accuracy are enhanced by using a scintillator array as described above thereby to improve medical diagnostic capabilities and nondestructive inspection accuracy.

### Solution to Problem

The scintillator array of an embodiment includes a plurality of scintillator segments each including a sintered phosphor, a first reflective layer interposed between adjacent scintillator segments so as to be integrated with the scintillator segments, and a second reflective layer located alongside the surfaces of the scintillator segments on which X-rays are incident. In the scintillator array of the embodiment, the amount of deformation at the corners of the second reflective layer is 20 µm or less.

### Brief Description of Drawings

FIG. 1 is a cross-sectional view showing a scintillator array of an embodiment.
FIG. 2 is a plan view showing the scintillator array of the embodiment.
FIG. 3 is a perspective view showing a scintillator segment for use in the scintillator array of the embodiments.
FIG. 4 is a diagram of a second reflective layer viewed from the X-ray incident side.
FIG. 5 is a diagram illustrating the amount of deformation.
FIG. 6 is a diagram illustrating a process of manufacturing the scintillator array of the embodiment.
FIG. 7 is a diagram illustrating a process of manufacturing the scintillator array of the embodiment.
FIG. 8 is a diagram illustrating a process of manufacturing the scintillator array of the embodiment.
FIG. 9 is a diagram illustrating a process of manufacturing the scintillator array of the embodiment.
FIG. 10 is an external view of the scintillator array of the embodiment.
FIG. 11 is a side view showing part of the scintillator array of the embodiment.
FIG. 12 is a diagram illustrating an X-ray detector of the embodiment.
FIG. 13 is a diagram illustrating an X-ray inspection device of the embodiment.
FIG. 14 is a graph representation the relationship between the surface roughness of the side of the scintillator array and the amount of deformation of the second reflective layer.

### Mode for Carrying Out the Invention

The best mode for carrying out a scintillator array, an X-ray detector and an X-ray inspection device of the embodiment will be described below.

### (scintillator Array)

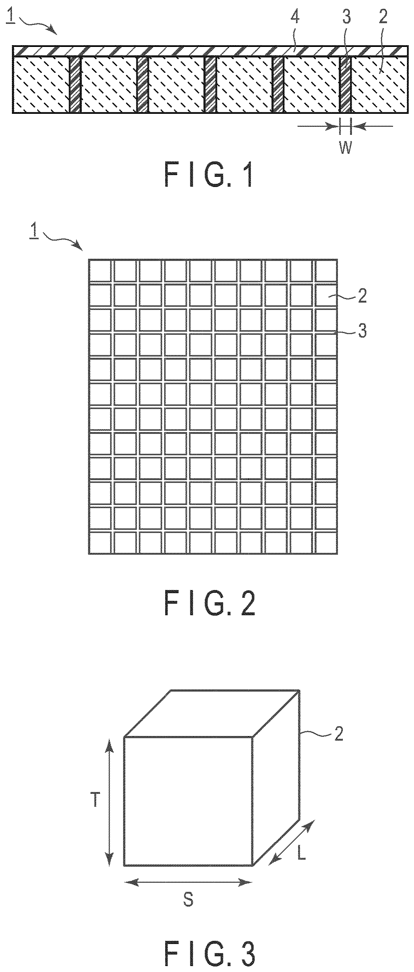

FIG. 1 is a cross-sectional view showing a scintillator array of the embodiment, and FIG. 2 is a plan view showing the scintillator array of the embodiment. In these figures, reference numeral 1 indicates a scintillator array, numeral 2 indicates a scintillator segment, numeral 3 indicates a first reflective layer, and numeral 4 indicates a second reflective layer. In FIG. 2, the second reflective layer 4 is not shown. The scintillator array 1 includes a plurality of scintillator segments 2. The first reflective layer 3 is interposed between adjacent scintillator segments 2. The first reflective layer 3 is bonded to its adjacent scintillator segments 2. The scintillator segments 2 are integrated by the first reflective layer 3 bonded thereto. That is, the scintillator array 1 has a structure in which the scintillator segments 2 are integrated by the first reflective layer 3. In addition, a second reflective layer 4 is provided on the surfaces of the scintillator segments 2 upon which X-rays are incident.

The scintillator array 1 may have either a structure in which the scintillator segments 2 are arranged in a row or a structure in which the scintillator segments 2 are arranged two-dimensionally in a predetermined number in longitudinal and transverse directions as shown in FIG. 2. When the scintillator segments 2 are arranged two-dimensionally, the first reflective layer 3 is provided between the scintillator segments 2 in the longitudinal and transverse directions. In addition, the second reflective layer 4 is provided on the X-ray incident surfaces of the scintillator segments 2 that are integrated by the first reflective layer 3. That is, the second reflective layer 4 is provided on first surfaces of the scintillator segments 2 and a first surface of the first reflective layer 3. The first surfaces of the scintillator segments 2 and the first surface of the first reflective layer 3 correspond to the surface of the scintillator array 1 on which X-rays are incident, and are flush with each other. Part of the first reflective layer 3 may project toward the second reflective layer 4 from the first surfaces of the scintillator segments 2. In this case, the first surface of the first reflective layer 3 is located closer to the X-ray incident side of the scintillator array 1 than the first surfaces of the scintillator segments 2. The second reflective layer 4 is provided on the entire upper surface of the first surfaces of the scintillator segments 2 and the first surface of the first reflective layer 3. The second reflective layer 4 constitutes the entire upper portion of the scintillator array 1. The number of scintillator segments 2 is appropriately set according to the structure and resolution of the X-ray detector.

The scintillator segments 2 are formed of sintered phosphors. As the phosphors, a rare earth oxysulfide phosphor, a rare earth garnet oxide phosphor, a rare earth oxide phosphor and the like can be used. An example of the rare earth oxysulfide phosphor ceramics is a rare earth oxysulfide phosphor containing praseodymium (Pr) as an activator. Examples of rare earth oxysulfide constituting the phosphor ceramics include oxysulfide of rare earth elements such as yttrium (Y), gadolinium (Gd), lanthanum (La) and lutetium (Lu). Note that the scintillator segments 2 may be made of, for example, an epoxy resin containing a phosphor.

In the scintillator array 1 of the embodiment, the scintillator segments 2 are preferably formed of rare earth oxysulfide phosphor ceramics (scintillator materials) having a composition represented by the following general formula:

RE₂O₂S:Pr ... (1)

(In the formula, RE represents at least one element selected from the group consisting of Y, Gd, La and Lu.)

Among the rare earth elements described above, Gd in particular has a large X-ray absorption coefficient and contributes to the improvement of optical output of the scintillator array 1. It is thus more preferable to use a Gd₂O₂:Pr phosphor for the scintillator segments 2 of the embodiment. Note that part of Gd may be substituted with other rare earth elements. In this case, the amount of substitution of Gd with other rare earth elements is preferably 10 mol% or less.

That is, in the scintillator array 1 of the embodiment, it is desirable to use, for the scintillator segments 2, rare earth oxysulfide phosphor ceramics which are substantially represented by the following general formula:

(Gd₁₋ₓ, RE'ₓ)₂O₂S:Pr ... (2)

(In the formula, RE' represents at least one element selected from the group consisting of Y, La and Lu, and x is a number (atomic ratio) satisfying 0 ≤ x ≤ 0.1.)

In the scintillator array 1 of the embodiment, praseodymium (Pr) is used as an activator for increasing the optical output of the rare earth oxysulfide phosphor ceramics (scintillator materials). Pr can further reduce afterglow compared with other activators. Therefore, the rare earth oxysulfide phosphor ceramics (scintillator materials) containing Pr as an activator is effective as a fluorescence generating means of a radiation detector.

The content of Pr in the rare earth oxysulfide phosphor ceramics is preferably in the range of 0.001 mol% or more and 10 mol% or less with respect to a phosphor matrix (for example, RE₂O₂S such as Gd₂O₂). If the content of Pr exceeds 10 mol%, the optical output lowers. When the content of Pr is less than 0.001 mol%, it cannot sufficiently bring about advantageous effects as the main activator. The content of Pr is more preferably in the range of 0.01 mol% or more and 1 mol% or less.

In the rare earth oxysulfide phosphor ceramics for use in the embodiment, at least one element selected from the group consisting of Ce, Zr and P may be contained as a coactivator in a small amount in addition to Pr as the main activator. These elements exhibit advantageous effects on suppression of exposure degradation, suppression of afterglow, etc. The total amount of coactivator is preferably in the range of 0.00001 mol% or more and 0.1 mol% or less with respect to the phosphor matrix.

In addition, the scintillator sintered body that forms the scintillator segments 2 of the embodiment is preferably made of high-purity rare earth oxysulfide phosphor ceramics (scintillator materials). Since impurities are factors in decreasing the sensitivity of the scintillator, it is preferable to reduce the amount of impurities as much as possible. In particular, phosphate radical (PO4) causes a decrease in sensitivity and thus its content is preferably 150 ppm or less. If a high density is obtained using fluoride or the like as a sintering aid, the sintering aid remains as an impurity, resulting in a decrease in sensitivity.

As shown in FIG. 3, the scintillator segments 2 are formed of sintered bodies having a cubic shape or a rectangular parallelepiped shape. The volume of each of the scintillator segments 2 is preferably 1 mm³ or less. Downsizing the scintillator segments 2 makes it possible to detect images with a high degree of definition. The length (L), width (S) or thickness (T) of each of the scintillator segments 2 is not necessarily limited, but is preferably 1 mm or less. If the volume of each of the scintillator segments 2 is reduced to 1 mm³ or less, the width (W) of the first reflective layer 3 can be reduced to 100 µm or less, and further to 50 µm or less.

In the scintillator array 1 of the embodiment, the scintillator segments 2 are integrated by the first reflective layer 3, and the second reflective layer 4 is provided on the X-ray incident surface of the integrated scintillator segments 2. The second reflective layer 4 of the scintillator array 1 of the embodiment has a deformation amount of 20 µm or less at its corner. The deformation amount at the corner of the second reflective layer 4 refers to a difference between the actual shape of the corner and the shape of the corner having the ideal two sides estimated from the two sides of a corner to be measured.

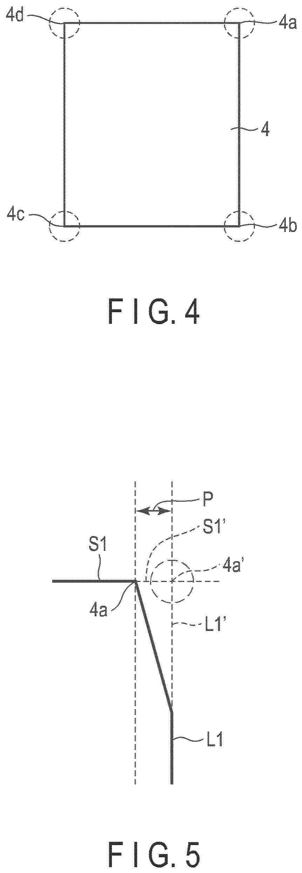

FIG. 4 is a diagram of the second reflective layer viewed from the X-ray incident side.

FIG. 5 is a diagram illustrating the amount of deformation.

As shown in FIG. 4, the amount of deformation can be measured at four corners 4a, 4b, 4c and 4d when the reflective layer on the X-ray incidence surface is viewed from the X-ray incidence side. FIG. 5 shows an example of the deformation amount, and for example, the deformation amount P of the corner 4a is a difference between the actual shape of the corner 4a and the shape of a corner 4a' having the ideal two sides S1' and L1' estimated from the two sides S1 and L1 of the corner 4a to be measured. The deformation amount is measured for each of the two sides, and the smaller value is used as the deformation amount. As shown in the figure, a difference between short sides S1 and S1' can be defined as the deformation amount P. This means that the deformation as shown in FIG. 5 affects the recognition of the position of the side L1 when the scintillator is combined with a diode, and the affection is correlated with the deformation amount P, which consequently affects the alignment accuracy. Since, furthermore, a difference between long sides L1 and L1' can be lessened by suppressing the deformation amount P, the deformation amount P has only to be decreased in order to reduce the affection of the deformation amount of the corner 4a. The deformation amount P can be measured at magnification of 200 times using an optical microscope having a length measurement function, such as a VHF series manufactured by Keyence Corporation.

If the deformation amount of a corner of the second reflective layer 4 of the scintillator array 1 is set to 20 µm or less, it is possible to suppress a decrease in dimensional accuracy and variations in the dimensional accuracy due to the deformation of the external dimensions of the scintillator array 1, thereby improving the resolution of diagnostic images of the X-ray detector. If the deformation amount of a corner of the second reflective layer 4 of the scintillator array 1 is 20 µm or less, it is possible to suppress a decrease in dimensional accuracy and variations in the dimensional accuracy due to the deformation of the external dimensions.

In addition, the thickness of the second reflective layer 4 may be in the range of 0.05 mm or more and 0.5 mm or less. If the thickness of the second reflective layer 4 is less than 0.05 mm, the effect of improving the reflection efficiency may not be sufficiently obtained. If the thickness of the second reflective layer 4 exceeds 0.5 mm, an X-ray dose to be transmitted decreases, and the detection sensitivity tends to decrease. The length of the long side of the scintillator array 1 may be 10 mm or more and 100 mm or less, and that of the short side thereof may be 1 mm or more and 100 mm or less.

The thickness of each of the scintillator segments 2 may be in the range of 0.2 mm or more and 10 mm or less. If the thickness of each of the scintillator segments 2 is less than 0.2 mm, the X-ray absorption tends to decrease, as does the sensitivity. If the thickness of each of the scintillator segments 2 exceeds 10 mm, the visible light in the scintillator segment does not reach the detection elements, and the sensitivity tends to decrease.

In the scintillator array 1 of the embodiment, the first reflective layer 3 by which the scintillator segments 2 are integrated and the second reflective layer 4 provided on the X-ray incident surfaces of the integrated scintillator segments 2 each contain a transparent resin and reflective particles dispersed in the transparent resin. The reflective particles dispersed in the transparent resin in the first reflective layer 3 and the reflective particles dispersed in the transparent resin in the second reflective layer 4 are preferably the same inorganic material particles. At least one inorganic material particle selected from the group consisting of titanium oxide (TiO₂), alumina (Al₂O₃), barium sulfide (BaSO₄) and zinc oxide (ZnO) is preferably used as a reflective particle. The use of the reflective particles makes it possible to increase the reflectivity of visible light emitted from the scintillator segments 2 by the reflective layers 3 and 4 and consequently to increase the optical output of the scintillator array 1.

The reflective particles preferably have a two-peak type particle size distribution. That is, the reflective particles preferably have a particle size distribution having a first particle diameter peak and a second particle diameter peak. In the particle size distribution of the reflective particles, the first particle diameter peak is preferably in the range of 200 nm or more and 350 nm or less, and the second particle diameter peak is preferably in the range of 750 nm or more and 1000 nm or less. If the particle size distribution of the reflective particles is a one peak type, the reflection efficiency of the reflective layers 3 and 4 with respect to light having a wavelength of 512 nm tends to decrease. In contrast, the use of reflective particles having a two-peak type particle size distribution can increase the reflection efficiency of the reflective layers 3 and 4. Specifically, the reflection efficiency of the reflective layers 3 and 4 with respect to light having a wavelength of 512 nm is preferably 90% or more, thereby reducing variations in the light output of the scintillator array 1.

As the transparent resin constituting the second reflective layer 4, it is preferable to use resin having a glass-transition point (transition temperature) of 30°C or lower. The temperature of the X-ray CT device during its manufacturing process, the temperature thereof during its use, and the temperature thereof during its storage are all about 18°C or higher and 50°C or lower. If, therefore, the glass-transition point of the transparent resin constituting the second reflective layer 4 is 30°C or lower, the second reflective layer 4 is easily expanded and contracted during its manufacturing process, use and storage. It is thus possible to suppress warpage due to, for example, a difference in thermal expansion coefficient between the second reflective layer 4 and the scintillator segments 2, a change in dimensions (pitch deviation of the segments and variations in external dimensions) based on the warpage, and the peeling of the second reflective layer 4. The glass-transition point of the transparent resin constituting the second reflective layer 4 is more preferably 20°C or lower.

As the transparent resin constituting the second reflective layer 4, it is preferable to use resin having a molecular structure including a double structure (double bond) in order to satisfy the foregoing glass-transition point of 30°C or lower. If the molecular structure of the transparent resin constituting the second reflective layer 4 does not include a double structure, the glass-transition point tends to exceed 30°C. The transparent resin constituting the second reflective layer 4 preferably contains at least one selected from the group consisting of an epoxy resin, a silicone resin, a phenol resin, a urea resin, a melamine resin, an unsaturated polyester, a polyurethane, an acrylic resin and a polyethylene terephthalate, and the molecular structure of the selected resin preferably has a double structure.

As the transparent resin constituting the first reflective layer 3, it is preferable to use resin having a glass-transition point of 50°C or higher. The temperature of the X-ray CT device during its manufacturing process, the temperature thereof during its use, and the temperature thereof during its storage are all about 18°C or higher and 50°C or lower. If, therefore, the glass-transition point of the transparent resin is 50°C or higher, it is possible to suppress a change in dimensions (pitch deviation of the segments, warpage of the scintillator array, and variations in external dimensions) due to expansion and contraction of the first reflective layer 3 during its manufacturing process, use and storage. The glass-transition point of the transparent resin constituting the first reflective layer 3 is preferably 60°C or higher and more preferably 85°C or higher.

As the transparent resin constituting the first reflective layer 3, it is preferable to use resin having a molecular structure including a cyclo-structure and not including a double structure (double bond) in order to satisfy the foregoing glass-transition point of 50°C or higher. If the molecular structure of the transparent resin constituting the first reflective layer 3 includes a double structure, the glass-transition point tends to be less than 50°C. The transparent resin constituting the first reflective layer 3 preferably contains at least one selected from the group consisting of an epoxy resin, a silicone resin, a phenol resin, a urea resin, a melamine resin, an unsaturated polyester, a polyurethane, an acrylic resin and a polyethylene terephthalate, and the molecular structure of the selected resin preferably has a cyclo-structure not including a double structure.

The ratio of the reflective particles and the transparent resin to form the first and second reflective layers 3 and 4 is preferably 15% or more and 60% or less in the mass ratio of the transparent resin and 40% or more and 85% or less in the mass ratio of the reflective particles (the mass ratio of the transparent resin + the mass ratio of the reflective particles = 100%). If the mass ratio of the reflective particles is less than 40%, the reflection efficiency of the reflective layers 3 and 4 tends to decrease, and the reflection efficiency of the reflective layers 3 and 4 with respect to light having a wavelength of 512 nm tends to be lower than 90%. If the mass ratio of the reflective particles exceeds 85%, the reflection efficiency of the reflective layers 3 and 4 does not change, but the mass ratio of the transparent resin is relatively reduced, which may make it difficult to stably solidify the reflective layers 3 and 4.

According to the scintillator array 1 using the first and second reflective layers 3 and 4 as described above, it is possible to suppress the amount of dimensional change due to pitch deviation of the segments, warpage, and a change in external dimensions. It is therefore possible to provide a scintillator array 1 having a small variation in optical output. It is also possible to suppress a decrease in the optical output of the scintillator array 1.

The scintillator array 1 of the embodiment is manufactured, for example, as follows.

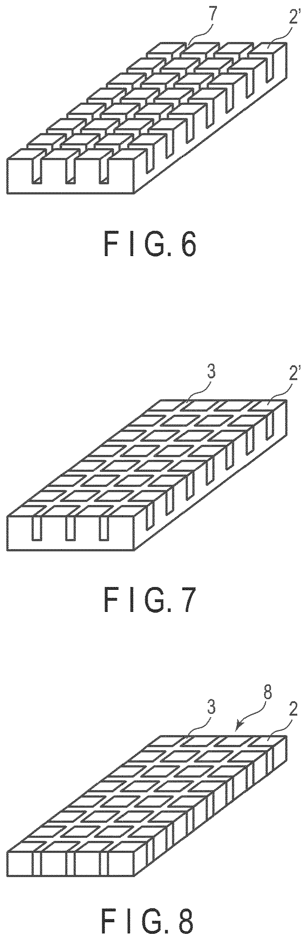

FIGS. 6 to 10 are diagrams illustrating an example of a manufacturing process of the scintillator array 1 of the embodiment.

First, a mixture (a first mixture) of reflective particles and an uncured resin composition constituting a transparent resin (an uncured material of a transparent resin) is prepared as a material for forming the first reflective layer 3.

Then, the sintered body of a scintillator material is subjected to a cutting process such as a cutout process and a grooving process to obtain, as shown in FIG. 6, a sintered body 2' in which grooves 7 are formed so that a plurality of scintillator segments processed into a predetermined shape are arranged at regular intervals. The groove 7 between adjacent scintillator segments is coated or filled with the foregoing first mixture of the reflective particles and uncured resin composition. The uncured resin composition preferably has a viscosity of 0.2 Pa·s or more and 1 Pa·s or less. If the viscosity of the resin composition is less than 0.2 Pa·s, the fluidity thereof is poor, and the coating or filling operability between the scintillator segments 2 is reduced. If the viscosity of the resin composition exceeds 1 Pa·s, the fluidity thereof becomes too high, and the coating or filling property decreases.

The first mixture is applied or filled between the scintillator segments 2 to cure the resin composition in the first mixture and thus to form the first reflective layer 3 as shown in FIG. 7.

Subsequently, as shown in FIG. 8, the bottoms of the grooves 7 in which the first reflective layer 3 is formed are removed by polishing or the like to obtain an arrayed object 8 of the scintillator segments 2 that are integrated by the first reflective layer 3.

Then, a mixture (a second mixture) of reflective particles and an uncured resin composition constituting a transparent resin (an uncured material of a transparent resin) is prepared as a material for forming the second reflective layer 4. The second mixture is applied to the X-ray incident surface of the arrayed object 8 of the scintillator segments 2 that are integrated by the first reflective layer 3. After that, the resin composition in the second mixture is cured to form the second reflective layer 4. Thus, the adjacent scintillator segments 2 of the arrayed object 8 are bonded and integrated by the first reflective layer 3, and the second reflective layer 4 is formed on the X-ray incident surface of the arrayed product 8. At this time, for example, a plurality of arrayed objects 8 can be arranged to coat and form the second reflective layer 4.

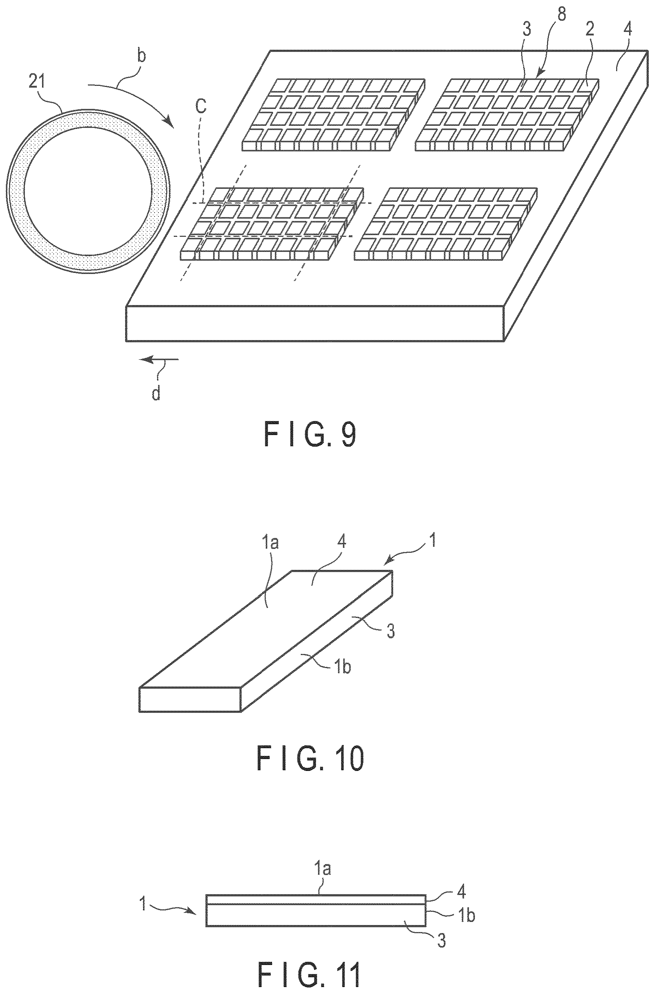

FIG. 9 is a diagram showing how individual scintillator arrays 1 are manufactured by cutting a plurality of arrayed objects 8 on which a second reflective layer 4 is formed. In FIG. 9, the arrayed objects 8 on which the second reflective layer 4 is formed are inverted. The arrayed objects 8 can be cut out along, for example, the dotted lines C along a first reflective layer 3 while moving the arrayed objects 8, for example, in the direction of arrow d, using a cutting blade 21 that rotates in the direction of b. If the four sides of each of the arrayed objects 8 are cut in this manner, the first reflective layer 3 is exposed as a side surface.

FIG. 10 shows the outward appearance of the resultant scintillator array.

FIG. 11 shows part of the side surface of the scintillator array 1.

As shown in FIG. 1, the resultant scintillator array 1 is provided with a second reflective layer 4 on its X-ray incident surface 1a, and is provided with an end portion of the second reflective layer 4 and a first reflective layer 3 on its side surface 1b.

The amount of deformation at the corners of the second reflective layer 4 of the scintillator array 1 tends to be affected by the surface roughness of the side surface 1b, mainly the surface roughness of the first reflective layer 3. The surface roughness of the first reflective layer 3 and the amount of deformation of the corners of the second reflective layer 4 can be adjusted by changing various cutting conditions, such as the moving speed of the arrayed objects 8, the rotating speed of the cutting blade 21, and the size of abrasive grains usable for the cutting blade 21. As the surface roughness, arithmetic average surface roughness Ra can be used. The arithmetic average surface roughness Ra of the first reflective layer 3 can be, for example, 0.6 µm or less. If it exceeds 0.6 µm, the amount of deformation tends to be larger than 20 µm.

Note that the curing treatment of the first and second mixtures is appropriately set according to the resin composition in the uncured state, the type of curing agent, and the like. For example, in the case of the thermosetting resin composition, the curing reaction is caused to proceed by heat treatment. The curing treatment of the first and second mixtures may be carried out separately or simultaneously. (X-ray detector)

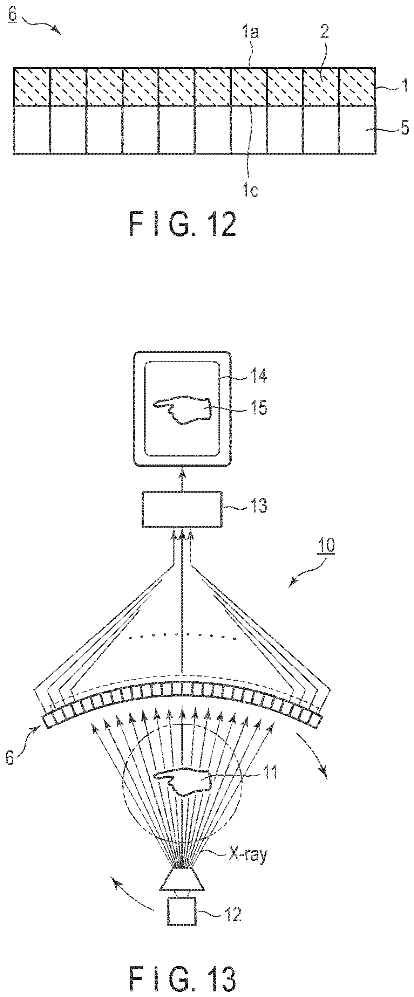

The X-ray detector of the embodiment includes the foregoing scintillator array 1 of the embodiment as a fluorescence generating means for emitting light in response to incident radiation, and further includes a photoelectric converting means for receiving light from the fluorescence generating means and converting the output of the light into an electrical output. FIG. 12 shows an example of the X-ray detector of the embodiment. The X-ray detector 6 shown in FIG. 12 includes a scintillator array 1 as the fluorescence generating means and a photoelectric conversion element 5 such as a photodiode as the photoelectric converting means. Note that in FIG. 12, the reflective layers 3 and 4 of the scintillator array 1 are not shown.

The scintillator array 1 has an X-ray incident surface 1a, and photoelectric conversion elements 5 are located on a surface 1c opposed to the X-ray incident surface 1a integrally as one unit. As the photoelectric conversion elements 5, for example, photodiodes are used. The photoelectric conversion elements 5 are arranged to correspond to their respective scintillator segments 2 that constitute the scintillator array 1. These constitute the X-ray detector 6.

### (X-ray Inspection Device)

The X-ray inspection device of the embodiment includes an X-ray source that irradiates a target subject with X-rays and an X-ray detector that detects X-rays transmitted through the target subject. As the X-ray detector, the foregoing X-ray detector of the embodiment is used. FIG. 13 shows an X-ray CT device 10 that is an example of the X-ray inspection device of the embodiment. In FIG. 13, reference numeral 10 denotes an X-ray CT device, 11 denotes a target subject, 12 denotes an X-ray tube, 13 denotes a computer, 14 denotes a display and 15 denotes an image of the target subject. The X-ray CT device 10 includes the X-ray detector 6 of the embodiment. The X-ray detector 6 is attached, for example, to the inner wall surface of a cylinder on which an imaging portion of the target subject 11 is disposed. The X-ray tube 12, which emits X-rays, is located at almost the center of the arc of the cylinder to which the X-ray detector 6 is attached. The target subject 11 is located between the X-ray detector 6 and the X-ray tube 12. A collimator (not shown) is provided on the X-ray incident surface side of the X-ray detector 6.

The X-ray detector 6 and the X-ray tube 12 are configured to rotate around the target subject 11 while performing X-ray imaging. Image information items of the target subject 11 are three-dimensionally collected from different angles. The signal obtained by the X-ray imaging (the electrical signal into which the photoelectric conversion element is converted) is processed by the computer 13 and displayed as a target subject image 15 on the display 14. The target subject image 15 is, for example, a tomographic image of the target subject 11. As shown in FIG. 12, a multi-tomographic X-ray CT device 10 can be configured by using the scintillator array 1 in which the scintillator segments 2 are two-dimensionally arranged. In this case, a plurality of tomographic images of the target subject 11 are picked up simultaneously, and the results of the image pickup can be depicted in three dimensions, for example.

The X-ray CT device 10 shown in FIG. 13 includes an X-ray detector 6 with the scintillator array 1 of the embodiment. As described above, the scintillator array 1 of the embodiment has an excellent optical output because the reflection efficiency of visible light emitted from the scintillator segments 2 is high based, for example, on the configuration of the reflective layers 3 and 4. The use of the X-ray detector 6 with the scintillator array 1 makes it possible to shorten the imaging time of the X-ray CT device 10. As a result, the exposure time of the target subject 11 can be shortened, and low exposure can be achieved. The X-ray inspection device (X-ray CT device 10) of the embodiment is not limited to X-ray inspection for medical diagnosis of human bodies, but is applicable to X-ray inspection of animals, X-ray inspection for industrial use, and the like. In addition, it contributes to improvement of accuracy of inspection by an X-ray non-destructive inspection device.

### [Example]

Next is a description of a specific example of the present invention and its evaluation results (example 1 and comparative examples 1 to 7).

A phosphor powder having a composition of Gd₂O₂:Pr (Pr concentration = 0.05 mol%) was provisionally molded by the rubber press, and the provisionally molded powder was deaerated and sealed in a Ta capsule, and then set in an HIP treatment device. Argon gas was sealed as a pressurized medium in the HIP treatment device, and treated for three hours under the conditions of 147 MPa pressure and 1425°C temperature. Thus, a cylindrical sintered body having a diameter of about 80 mm and a height of about 120 mm was produced.

The sintered body was cut to have a width of 35 mm and a length of 95 mm. In addition, it was subjected to a grooving process in the same manner as shown in FIG. 6 to cut the scintillator segment 2' having a thickness of 1.2 mm, a width of 0.9 mm and a length of 1.0 mm into a matrix having 100 segments in the length direction and 30 segments in the width direction via the grooves 7.

The grooving process can be performed by a blade called a disk-shaped dicer blade. The dicer blade can be processed so as to protrude from the edge portion of the sintered body to be grooved. This processing makes it possible to suppress the occurrence of burrs and the like. In the grooving process, the feed rate of the dicer blade can be controlled. The feed rate can be set at 0.2 mm/sec or higher and 10 mm/sec or lower.

In order to perform the grooving process, the sintered body that is cut out can be fixed to a processing table. The sintered body can be fixed with wax or the like. Examples of the wax include paraffin wax. The melting point of the wax can be set at 45°C or higher and 80°C or lower.

In addition, the grain size of abrasive grains of the dicer blade can be controlled. The count number of abrasive grains may be #200 or more and #2000 or less. The larger the count number of abrasive grains, the larger the grain size. If abrasive grains the count number of which is less than #200 are used, the grain size becomes too large and the surface tends to be rough. On the other hand, if abrasive grains the count number of which exceeds #2000 are used, the amount of processing that can be performed at one time becomes small, and the processing tends to take time. In addition, the rotation speed of the dicer blade can be set at 1000 rpm or higher and 25000 rpm or lower. If the rotation speed is less than 1000 rpm, processing tends to take time. On the other hand, if the rotation speed exceeds 25000 rpm, the amount of generated frictional heat is large, and the occurrence rate of defects called chipping tends to increase due to the generated frictional heat.

In the the dicer blade processing, water for cooling can be injected into a portion to be processed. The injection pressure of water for cooling can be further adjusted. The injection pressure can be adjusted by adjusting the amount of water. The amount of water may be set at 0.2 liters/minute to 2.0 liters/minute, for example, about 1.0 liter/minute. The water for cooling may be set at a temperature of 28°C or lower.

The water for cooling may contain a cutting fluid component. There are water-soluble and oily cutting fluids, and water-soluble cutting fluids are preferably used. Types of water-soluble cutting fluid are a soluble type, an emulsion type, a chemical solution type, and the like. In addition, the oily cutting fluid tends not to be cleaned off sufficiently by water cleaning, which will be described later.

When the sintered body is completely processed, it can be soaked in water and subjected to water injection (including water spraying) as water cleaning. If the sintered body is cleaned with water, the powders generated during the grooving process can be removed, as can be the cutting liquid components remaining on the surface of the sintered body during the grooving process. The soaking cleaning can be combined with ultrasonic cleaning.

In addition, if wax is used to fix the sintered body, the sintered body can be cleaned and then warmed with a hot plate or the like and thus unfixed. The unfixed and processed sintered body can be cleaned further to remove wax components. As this cleaning, an organic solvent may be used. Examples of the organic solvent include alcohols such as isopropanol, butanol, 2-butanol, ethanol and propanol, or ketones such as acetone. If an alcohol or a ketone is used, water remaining on the surface of the sintered body together with the wax components can be removed, and the sintered body can easily be dried.

As shown in FIG. 7, first reflective layers 3 each including a mixture of 65 mass% reflective particles and 35 mass% transparent resin were applied to the foregoing matrix of the scintillator segments 2', and the matrix was cured.

In addition, as shown in FIG. 8, the bottom portions of the grooves were removed by polishing to produce arrayed objects 8 with which the scintillator segments 2 are integrated. The first reflective layers each having a thickness of 0.1 mm were placed in the longitudinal and transverse directions of the scintillator array. As the reflective particles, a mixture of 80 mass% titanium oxide particles and 20 mass% alumina particles was used. In example 1 and comparative examples 1 to 7, a hard epoxy resin A1 having a molecular structure including a cyclo structure without a double structure was used as the transparent resin to form the first reflective layer. The glass-transition point of the hard epoxy resin A1 was adjusted according to the molecular structure and was set at 85°C.

Next, as shown in FIG. 9, a plurality of arrayed objects 8, which were obtained by integrating a plurality of scintillator segments 3 by the first reflective layer were arranged at regular intervals, and a second reflective layer 4 was formed on the X-ray incident surface of each of the objects. The thickness of the second reflective layer 4 was 0.3 mm. As the reflective particles, a mixture of 80 mass% titanium oxide particles and 20 mass% alumina particles was used as in the first reflective layer 3. In example 1 and comparative examples 1 to 7, a soft epoxy resin B1 having a molecular structure including a double structure was used as the transparent resin to form the second reflective layer 4. The glass-transition point of the soft epoxy resin B1 was adjusted according to the molecular structure and was set at 10°C.

Subsequently, the arrayed objects 8 on each of which the second reflective layers 4 is formed are cut into scintillator arrays 1 having various types of surface roughness of example 1 and comparative examples 1 to 7.

In example 1 and comparative examples 1 to 7, arithmetic average surface roughness Ra was measured as the surface roughness of the scintillator arrays 1. The surface roughness tester SJ-210 (manufactured by Mitutoyo Corporation) was used for the measurement. As the measurement conditions, the measurement speed was set to 0.5 mm/sec, the reference length was set to 0.25 mm and the cutoff value λs was set to 2.5 µm, and the arithmetic average surface roughness Ra was calculated.

The results of the above calculation are shown in table 1 below.

In addition, the amount of deformation of the scintillator array according to each of examples 1 and comparative examples 1 to 7 was measured. For the measurement, an optical microscope having a length measuring function was used and its magnification was set at 200 times.

First, as shown in FIG. 4, the shape of each of four corners 4a, 4b, 4c and 4d was measured when viewing the second reflective layer from the X-ray incident plane. Then, as shown in FIG. 5, a difference between two sides S1 and L1 of, for example, the measured corner 4a and two sides S1' and L1' of the ideal corner 4a' estimated from the two sides S1 and L1 was determined. At this time, an amount of deformation is determined for each of the two sides, and as shown in FIG. 5, the smaller amount was used as a deformation amount P.

The results obtained are shown in table 1 below.

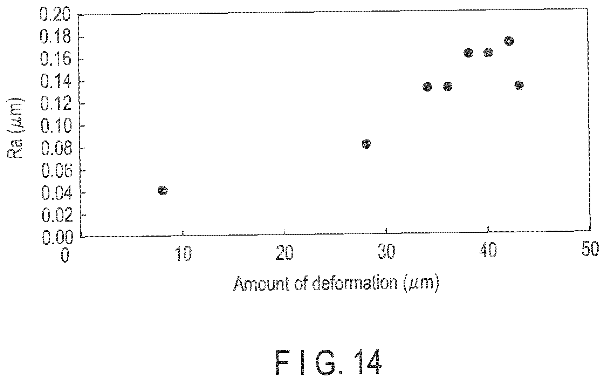

FIG. 14 is a graph showing the relationship between the surface roughness of the side surface of the scintillator array and the amount of deformation of the second reflective layer.

In the graph of FIG. 14, the results shown in table 1 are plotted.

If the arithmetic average surface roughness Ra is 0.06 µm or less as shown in table 1 and FIG. 14, the amount of deformation can be set at 20 µm or less.

**Table 1**

| | Amount of deformation P(µm) | Arithmetic average surface roughness Ra (µm) |
|---|---|---|
| Embodiment 1 | 8 | 0.04 |
| Comparative example 1 | 40 | 0.16 |
| Comparative example 2 | 43 | 0.13 |
| Comparative example 3 | 42 | 0.17 |
| Comparative example 4 | 38 | 0.16 |
| Comparative example 5 | 36 | 0.13 |
| Comparative example 6 | 34 | 0.13 |
| Comparative example 7 | 28 | 0.08 |

As shown in table 1, the amount of deformation of the scintillator array in example 1 was smaller than that in each of comparative Examples 1 to 7, and it was confirmed to be 20 µm or smaller. In addition, as shown in FIG. 14 and table 1, the smaller the arithmetic average surface roughness Ra, the smaller the deformation amount P.

According to the scintillator array having a deformation amount as described above, the dimensional accuracy can be improved to be adapted to the downsizing of the detector and the like while maintaining the excellent optical output. In addition, alignment accuracy can satisfactorily be maintained when the scintillator array is bonded to the photodiodes, as can be dimensional accuracy when the area of the scintillator array increases. It is therefore possible to provide a scintillator array with the optimum dimensional accuracy and reliability. The use of such a scintillator array makes it possible to provide an X-ray detector and an X-ray inspection device which are improved in resolution and image accuracy and thus improved in medical diagnostic ability and nondestructive inspection accuracy.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A scintillator array comprising:
a plurality of scintillator segments each including a sintered body of a phosphor;
a first reflective layer provided between adjacent scintillator segments; and
a second reflective layer provided on a surface side of the scintillator segments on which X-rays are incident,
wherein an amount of deformation of corners of the second reflective layer is 20 µm or less.

2. The scintillator array of claim 1, wherein an arithmetic average surface roughness of a side surface opposed to the surface side on which the X-rays are incident is 0.06 µm or less.

3. The scintillator array of claim 1, wherein:
the first reflective layer and the second reflective layer each contain a transparent resin and reflective particles dispersed in the transparent resin;
the reflective particles of the second reflective layer are identical to the reflective particles of the first reflective layer; and
the transparent resin of the first reflective layer has a glass-transition point of 50°C or higher, and the transparent resin of the second reflective layer has a glass-transition point of 30°C or lower.

4. The scintillator array of claim 3, wherein the transparent resin of the first reflective layer has a molecular structure of a cyclo structure not including a double structure, and the transparent resin of the second reflective layer has a molecular structure of a double structure.

5. The scintillator array of claim 3, wherein the reflective particles contain at least one inorganic particle selected from the group consisting of titanium oxide, alumina, barium sulfate and zinc oxide.

6. The scintillator array of claim 3, wherein the transparent resin of the first reflective layer and the transparent resin of the second reflective layer each contain at least one selected from the group consisting of an epoxy resin, a silicone resin, a phenolic resin, a urea resin, a melamine resin, an unsaturated polyester, polyurethane, an acrylic resin, and polyethylene terephthalate.

7. The scintillator array of claim 3, wherein the first reflective layer and the second reflective layer each contain 15% or more and 60% or less in a mass ratio of the transparent resin and 40% or more and 85% or less in a mass ratio of the reflective particles.

8. The scintillator array of one of claims 1 to 7, wherein:
the phosphor is a rare earth oxysulfide phosphor represented by a general formula: RE₂O₂S:Pr wherein RE is at least one element selected from a group consisting of Y, Gd, La and Lu; and
the phosphor has a composition wherein a content of Pr in the RE₂O₂S is 0.001 mol% or more and 10 mol% or less.

9. The scintillator array of claim 8, wherein the rare earth oxysulfide phosphor includes a gadolinium oxysulfide phosphor containing Pr as an activator.

10. An X-ray detector comprising the scintillator array of one of claims 1 to 9.

11. An X-ray inspection device comprising the X-ray detector of claim 10.
